# EUROPÄISCHE PATENTSCHRIFT

(11) **EP 2 882 947 B1**
(45) Veröffentlichungstag und Bekanntmachung des Hinweises auf die Patenterteilung: **28.12.2016**
(21) Anmeldenummer: 13739643.8
(22) Anmeldetag: 15.07.2013
(51) Int. Cl.: F02B 23/10, F02D 41/30, F02D 17/00

(54) **BRENNKRAFTMASCHINE MIT EINEM ERSTEN UND EINEM ZWEITEN INJEKTOR**
INTERNAL COMBUSTION ENGINE WITH A FIRST AND A SECOND INJECTOR
MOTEUR À COMBUSTION INTERNE DOTÉ D'UN PREMIER ET D'UN DEUXIÈME INJECTEUR

(30) Priorität: 10.08.2012 DE 102012214261
(43) Veröffentlichungstag der Anmeldung: 17.06.2015
(73) Patentinhaber: Bayerische Motoren Werke Aktiengesellschaft, 80809 München (DE)
(72) Erfinder: GUTZER, Ulrich, 80937 Muenchen (DE)
(86) Internationale Anmeldenummer: PCT/EP2013/064871
(87) Internationale Veröffentlichungsnummer: WO 2014/023518

(56) Entgegenhaltungen:
- DE-A1-102008 044 243
- DE-B3-102006 014 071
- US-A1- 2010 147 261

## Beschreibung

Die Erfindung betrifft eine Brennkraftmaschine mit einem ersten und einem zweiten Injektor mit den Merkmalen aus dem Oberbegriff des Patentanspruchs 1 sowie Verfahren zum Betreiben dieser Brennkraftmaschine mit den Merkmalen aus den Patentansprüchen 3 bis 6.

Durch die drehzahl- und lastabhängig notwendige Spreizung der Einspritzmenge eines direkteinspritzenden Kraftstoffinjektors von kleinster zu größter Last der Brennkraftmaschine ist eine genaue Regelung kleiner und kleinster Kraftstoffeinspritzmengen beeinträchtigt. Ebenso bedingt die maximal notwendige Kraftstoffmenge die Größe, bzw. den Durchmesser der Einspritzbohrungen in der Injektorspitze und verschlechtert die erreichbaren Tröpfchenspektren (Verschiebung des Tröpfchendurchmessers in Richtung größer) bei kleinen und kleinsten Lasten der Brennkraftmaschine. Weiter führen die großen Tröpfchen zu einer großen Eindringtiefe des Kraftstoffstrahls in den Brennraum und zur Benetzung anderer Bauteile im Brennraum. Diese Gründe führen dazu, dass der Kraftstoffdruck erhöht werden muss mit Nachteilen bei Bauaufwand und Reibung. Auch mit der üblichen Kraftstoffdruckerhöhung sind nicht alle genannten Probleme vollständig lösbar.

Die Verwendung einer weiteren Kraftstoffzuführungsart entschärft beide Probleme. Bekannt ist hier z. B. die Verwendung einer Saugrohreinspritzung. Nachteilig ist hierbei die fehlende Innenkühlung des Brennraums durch den direkt eingespritzten Kraftstoff, mit der Folge einer Verdichtungsabsenkung. Zur Verbesserung der Gemischaufbereitung einer Brennkraftmaschine ist es beispielsweise aus der deutschen Offenlegungsschrift DE 10 2004 034 505 A1 bekannt, zwei Kraftstoffinjektoren zur Einspritzung des Kraftstoffes zu verwenden. In der DE 10 2004 034 505 A1 wird vorgeschlagen, einen Kraftstoffinjektor in das Saugrohr einzusetzen und einen Kraftstoffinjektor für eine direkte Einspritzung des Kraftstoffs in den Brennraum zu verwenden. Weiter ist aus dem deutschen Patent DE 10 2006 014 071 B3, von der die vorliegende Erfindung ausgeht, ein Brennverfahren für eine Brennkraftmaschine bekannt, bei dem Kraftstoff mittels einer oder mehrerer Einspritzeinrichtungen direkt in den Brennraum eingespritzt wird. Hierbei ist der Einspritzvorgang in mindestens zwei Teileinspritzungen unterteilt, die in unterschiedliche Bereiche des Brennraums erfolgen. In der DE 10 2006 014 071 B3 wird vorgeschlagen, dass eine Voreinspritzung in zentrale Bereiche und eine Haupteinspritzung in äußere Bereiche des Brennraums mit freier räumlicher Anordnung der Einspritzstrahlen gerichtet wird.

Aus der deutschen Offenlegungsschrift DE 10 2008 044 243 A1 ist eine Brennkraftmaschine mit einem ersten und einen zweiten Injektor für eine Brennstoffeinspritzung direkt in einen Brennraum der Brennkraftmaschine bekannt. Der Brennraum wird einerseits von einem hubbeweglich in einem Zylinder angeordneten Kolben und andererseits von einem Zylinderkopf begrenzt. In dem Zylinderkopf sind ein Gaswechseleinlass- und ein Gaswechselauslassventil für einen Ladungswechsel vorgesehen. Weiter ist der erste Injektor weitgehend in Richtung der Zylinderachse und der zweite Injektor ist unter einem Winkel zur Zylinderachse ausgerichtet in dem Zylinderkopf angeordnet.

Auch wenn dieser Stand der Technik keine prinzipiellen Nachteile aufweist, liegt der vorliegenden Erfindung die Aufgabe zugrunde, die Zudosiergenauigkeit von Kraftstoff für eine gattungsgemäße Brennkraftmaschine zu verbessern.

Diese Aufgabe wird durch die Merkmale im kennzeichnenden Teil des Patentanspruchs 1 gelöst.

Neben der Lösung der o. g. Probleme bestehen weitere funktionale Potentiale durch geeignete Ausgestaltung der Kraftstoffeinspritzmengen der einzel-nen Injektoren sowie ggf. weiterer gemischaufbereitender Eigenschaften, wie z. B. die Beeinflussung des Strahlbildes, die Darstellung der Kleinstmenge an Kraftstoff, die Spezialisierung auf einen bestimmten Lastbereich der Brennkraftmaschine. Aufgrund der erfindungsgemäß anpassbaren Durchflussmengen von Kraftstoff durch den Injektor kann die innere Reibung in der Hochdruckpumpe insbesondere bei niedrigen Lasten der Brennkraftmaschine reduziert werden.

Die Ausgestaltung gemäß Patentanspruch 2 ist eine besonders bevorzugte Variante, die eine weitere Anpassung an unterschiedliche Betriebszustände der Brennkraftmaschine erlaubt.

Die Verfahren gemäß den Patentansprüchen 3 bis 6 sind besonders bevorzugte Verfahren zum Betrieb der erfindungsgemäßen Brennkraftmaschine.

Im Folgenden ist die Erfindung anhand eines Ausführungsbeispieles in einer einzigen Figur näher erläutert.

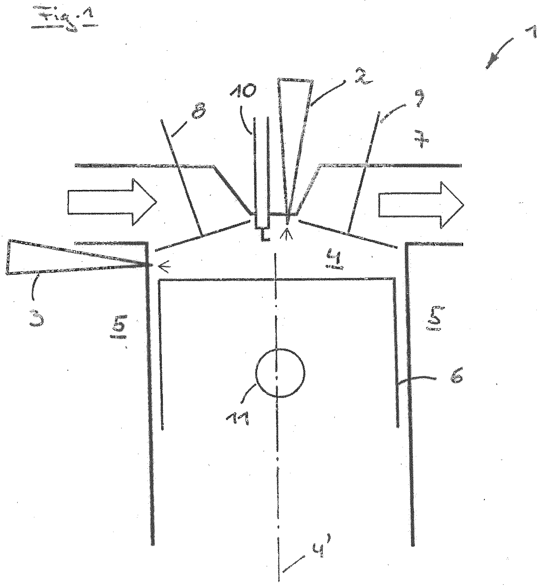

- Fig. 1: zeigt schematisch eine erfindungsgemäße Hubkolben-Brennkraftmaschine mit einem ersten und einem zweiten Injektor.

Fig. 1 zeigt schematisch eine erfindungsgemäße Hubkolben-Brennkraftmaschine 1 mit einem ersten Injektor 2 und einem zweiten Injektor 3 für eine Brennstoffeinspritzung direkt in einen Zylinder 4 in einem Kurbelgehäuse 5 der Brennkraftmaschine 1. Selbstverständlich kann die Erfindung beispielsweise auch in Kreiskolben-Brennkraftmaschinen und Zwei- oder Viertakt-Hubkolben-Brennkraftrnaschinen eingesetzt werden.

Ein Brennraum wird einerseits von einem in dem Zylinder 4 hubbeweglich angeordneten Kolben 6 und andererseits von einem Zylinderkopf 7 begrenzt. Weiter weist der Zylinderkopf 7 zumindest ein Gaswechseleinlass- und ein Gaswechselauslassventil 8, 9 für einen Ladungswechsel auf. Während der erste Injektor 2 weitgehend in Richtung einer Zylinderachse 4' ausgerichtet angeordnet ist, ist der zweite Injektor 3 unter einem Winkel zur Zylinderachse 4' ausgerichtet. Der zweite Injektor 3 kann entweder im Zylinderkopf 7 oder im Zylinder 4 angeordnet sein.

Eine Ladungswechselrichtung ist mit zwei Pfeilen in nicht bezifferten Ladungswechselkanälen schematisch eingezeichnet, eine Zündeinrichtung ist mit 10 und ein Kolbenbolzen im Kolben 6 ist mit 11 beziffert.

Erfindungsgemäß ist mit dem ersten Injektor 2 maximal 80 % und mit dem zweiten Injektor 3 maximal 50 % einer Vollastbrennstoffmenge in den Zylinder 4 einbringbar, die von der Brennkraftmaschine 1 bei einer Volllast benötigt wird.

Bevorzugt sind der erste und der zweite Injektor 2, 3 zeitgleich und/oder zeitlich versetzt betreibbar.

Mit dieser erfindungsgemäß ausgestalteten Brennkraftmaschine mit einem ersten und einem zweiten Injektor 2, 3 sind nun folgende Verfahren durchführbar:
1. dass in einem Leerlauf der Brennkraftmaschine 1 die Brennstoffeinspritzung einer Leerlauf-Brennstoffmenge nur mit dem ersten Injektor 2 erfolgt;
2. dass während eines Katalysatorheizens die Brennstoffeinspritzung einer Katalysatorheiz-Brennstoffmenge nur mit dem ersten Injektor 2 erfolgt;
3. dass während einer Teillast der Brennkraftmaschine 1 die Brennstoffeinspritzung einer Teillast-Brennstoffmenge zwischen 50 % und 90 % mit dem ersten Injektor 2 und zwischen 10 % und 50 % mit dem zweiten Injektor 3 erfolgt;
4. dass während einer Volllast der Brennkraftmaschine 1 die Brennstoffeinspritzung einer Volllast-Brennstoffmenge zwischen 50 % und 80 % mit dem ersten Injektor 2 und zwischen 20 % und 50 % mit dem zweiten Injektor 3 erfolgt

Unter einer Leerlauf-Brennstoffmenge wird die Brennstoffmenge verstanden, die die Brennkraftmaschine 1 für einen Leerlauf benötigt.

Unter einer Katalysatorheiz-Brennstoffmenge wird die Brennstoffmenge verstanden, die die Brennkraftmaschine 1 während einer Katalysatorheizphase benötigt. Hierbei erfolgt die Kraftstoffeinspritzung zeitlich relativ spät, so dass unverbrannte Kohlenwasserstoffe zum Aufheizen des Katalysators in den Abgastrakt ausgetragen werden.

Unter einer Teillast-Brennstoffmenge wird die Brennstoffmenge verstanden, die die Brennkraftmaschine 1 während einer Teillast benötigt. Dies ist von Brennkraftmaschine zu Brennkraftmaschine unterschiedlich und von der Temperatur, der Drehzahl, der angeforderten Last abhängig.

Unter einer Volllast-Brennstoffmenge wird die Brennstoffmenge verstanden, die die Brennkraftmaschine im Bereich der Volllast benötigt.

### Bezugszeichenliste:

- 1.: Brennkraftmaschine
- 2.: erster Injektor
- 3.: zweiter Injektor
- 4.: Zylinder
- 4': Zylinderachse
- 5.: Kurbelgehäuse
- 6.: Kolben
- 7.: Zylinderkopf
- 8.: Gaswechseleinlassventil
- 9.: Gaswechselauslassventil
- 10.: Zündeinrichtung
- 11.: Kolbenbolzen

## Patentansprüche

1. Brennkraftmaschine (1) mit einem ersten Injektor (2) und einem zweiten Injektor (3) für eine Brennstoffeinspritzung direkt in einen Brennraum in einem Zylinder (4) in einem Kurbelgehäuse (5) der Brennkraftmaschine (1), der einerseits von einem in dem Zylinder (4) hubbeweglich angeordneten Kolben (6) und andererseits von einem Zylinderkopf (7) begrenzt ist, wobei in dem Zylinderkopf (7) zumindest ein Gaswechseleinlass- (8) und ein Gaswechselauslassventil (9) für einen Ladungswechsel vorgesehen sind, wobei der erste Injektor (2) weitgehend in Richtung einer Zylinderachse (4') und der zweite Injektor (3) unter einem Winkel zur Zylinderachse ausgerichtet angeordnet ist,
**dadurch gekennzeichnet, dass** mit dem ersten Injektor (2) maximal 80 % und mit dem zweiten Injektor (3) maximal 50 % einer Volllast-Brennstoffmenge in den Zylinder (4) einbringbar ist, die von der Brennkraftmaschine (1) bei einer Volllast benötigt wird.

2. Brennkraftmaschine nach Patentanspruch 1,
**dadurch gekennzeichnet, dass** der erste und der zweite Injektor (2, 3) zeitgleich und/oder zeitlich versetzt betreibbar sind.

3. Verfahren zum Betrieb einer Brennkraftmaschine nach Patentanspruch 1 oder 2,
**dadurch gekennzeichnet, dass** in einem Leerlauf der Brennkraftmaschine (1) die Brennstoffeinspritzung einer Leerlauf-Brennstoffmenge nur mit dem ersten Injektor (2) erfolgt.

4. Verfahren zum Betrieb einer Brennkraftmaschine nach Patentanspruch 1 oder 2,
**dadurch gekennzeichnet, dass** während eines Katalysator Heizens die Brennstoffeinspritzung einer Katalysator-Heiz-Brennstoffmenge nur mit dem ersten Injektor (2) erfolgt.

5. Verfahren zum Betrieb einer Brennkraftmaschine nach Patentanspruch 1 oder 2,
**dadurch gekennzeichnet, dass** während einer Teillast der Brennkraftmaschine (1) die Brennstoffeinspritzung einer Teillast-Brennstoffmenge zwischen 50 % und 90 % mit dem ersten Injektor (2) und zwischen 10 % und 50 % mit dem zweiten Injektor (3) erfolgt.

6. Verfahren zum Betrieb einer Brennkraftmaschine nach Patentanspruch 1 oder 2,
**dadurch gekennzeichnet, dass** während einer Volllast der Brennkraftmaschine (1) die Brennstoffeinspritzung einer Volllastbrennstoffmenge zwischen 50 % und 80 % mit dem ersten Injektor (2) und zwischen 20 % und 50 % mit dem zweiten Injektor (3) erfolgt.

## Claims

1. An internal combustion engine (1) having a first injector (2) and a second injector (3) for injecting fuel directly into a combustion chamber in a cylinder (4) in a crankcase (5) of the internal combustion engine (1), which combustion chamber is delimited on one side by a piston (6) which is arranged in the cylinder (4) and performs a stroke motion and is delimited on the other side by a cylinder head (7), wherein provided in the cylinder head (7) are at least one gas exchange inlet valve (8) and one gas exchange outlet valve (9) for a charge exchange, wherein the first injector (2) is substantially arranged in the direction of a cylinder axis (4') and the second injector (3) is arranged oriented at an angle to the cylinder axis,
**characterised in that** the first injector (2) can introduce into the cylinder (4) at most 80 % and the second injector (3) can introduce at most 50 % of a full load amount of fuel, which amount of fuel is required by the internal combustion engine (1) for a full load.

2. An internal combustion engine according to claim 1,
**characterised in that** the first and the second injector (2, 3) can be operated at the same time and/or staggered in time.

3. A method for operating an internal combustion engine according to claim 1 or claim 2,
**characterised in that** while the internal combustion engine (1) is idling, an amount of fuel for idling is only injected by the first injector (2).

4. A method for operating an internal combustion engine according to claim 1 or claim 2,
**characterised in that** during a catalyst heating, an amount of fuel for catalyst heating is only injected by the first injector (2).

5. A method for operating an internal combustion engine according to claim 1 or claim 2,
**characterised in that** during a part-load of the internal combustion engine (1), a part-load amount of fuel of between 50 % and 90 % is injected by the first injector (2) and a part-load amount of fuel of between 10 % and 50 % is injected by the second injector (3).

6. A method for operating an internal combustion engine according to claim 1 or claim 2,
**characterised in that** during a full-load of the internal combustion engine (1), a full-load amount of fuel of between 50 % and 80 % is injected by the first injector (2) and a full-load amount of fuel of between 20 % and 50 % is injected by the second injector (3).

## Revendications

1. Moteur à combustion interne (1) comprenant un premier injecteur (2) et un second injecteur (3) pour permettre l'injection directe de carburant dans la chambre de combustion d'un cylindre (4), situé dans le carter moteur (5) du moteur à combustion interne (1), qui est limitée d'une part par un piston (6) monté mobile en va et vient dans le cylindre (4), et d'autre part, par une culasse (7), dans laquelle sont montées au moins une soupape d'admission d'échange de gaz (8) et au moins une soupape d'échappement d'échange de gaz (9) pour permettre un transfert de charge, le premier injecteur (2) étant essentiellement orienté dans la direction de l'axe du cylindre (4') et le second injecteur (3) étant orienté angulairement par rapport à cet axe,
**caractérisé en ce que**
le premier injecteur (2) permet d'introduire dans le cylindre (4) au maximum 80% de la quantité de carburant à pleine charge nécessaire au moteur à combustion interne (1) à pleine charge tandis que le second injecteur (3) permet d'introduire au maximum 50% de cette quantité de carburant à pleine charge.

2. Moteur à combustion interne conforme à la revendication 1,
**caractérisé en ce que**
le premier injecteur et le second injecteur (2, 3) peuvent être actionnés simultanément et/ou en étant décalés dans le temps.

3. Procédé d'actionnement d'un moteur à combustion interne conforme à la revendication 1 ou 2,
**caractérisé en ce que**
lorsque le moteur à combustion interne (1) fonctionne en marche à vide, l'injection de la quantité de carburant de marche à vide n'est effectuée qu'avec le premier injecteur (2).

4. Procédé d'actionnement d'un moteur à combustion interne conforme à la revendication 1 ou 2,
**caractérisé en ce que**
pendant le chauffage d'un catalyseur, l'injection de la quantité de carburant de chauffage du catalyseur n'est effectuée qu'avec le premier injecteur (2).

5. Procédé d'actionnement d'un moteur à combustion interne conforme à la revendication 1 ou 2,
**caractérisé en ce que**
lorsque le moteur à combustion interne (1) fonctionne en charge partielle, l'injection de la quantité de carburant de charge partielle est effectuée pour entre 50% et 90% avec le premier injecteur (2) et pour entre 10% et 50% avec le second injecteur (3).

6. Procédé d'actionnement d'un moteur à combustion interne conforme à la revendication 1 ou 2,
**caractérisé en ce que**
lorsque le moteur à combustion interne (1) fonctionne à pleine charge, l'injection de la quantité de carburant de pleine charge est effectuée pour entre 50% et 80% avec le premier injecteur (2) et pour entre 20% et 50% avec le second injecteur (3).
